# FASCICULE DE BREVET EUROPEEN

(11) **EP 1 182 093 B1**
(45) Date de publication et mention de la délivrance du brevet: **17.03.2004**
(21) Numéro de dépôt: 01402219.8
(22) Date de dépôt: 24.08.2001
(51) Int. Cl.: B60R 16/04

(54) **Agencement de sécurité pour le montage d'une batterie**
Sicherheitsanordnung zur Montage einer Batterie
Security arrangement for mounting a battery

(30) Priorité: 25.08.2000 FR 0010930
(43) Date de publication de la demande: 27.02.2002
(73) Titulaire: Renault s.a.s., 92100 Boulogne Billancourt (FR)
(72) Inventeur: Suss, Marc, 92170 Vanves (FR); Renollet, Fabienne, 78960 Voisins le Bretonneux (FR)

(56) Documents cités:
- DE-A- 19 726 192
- PATENT ABSTRACTS OF JAPAN vol. 017, no. 709 (M-1535), 24 décembre 1993 (1993-12-24) & JP 05 246252 A (TOYOTA MOTOR CORP;OTHERS: 01), 24 septembre 1993 (1993-09-24)
- PATENT ABSTRACTS OF JAPAN vol. 018, no. 398 (M-1645), 26 juillet 1994 (1994-07-26) & JP 06 115356 A (TOYOTA MOTOR CORP;OTHERS: 01), 26 avril 1994 (1994-04-26)

## Description

L'invention concerne un agencement pour le montage d'une batterie d'accumulateurs dans un véhicule automobile.

L'invention concerne plus particulièrement un agencement pour le montage d'une batterie d'accumulateurs dans un véhicule automobile qui comporte une partie de structure de caisse formant compartiment moteur qui est agencée en avant d'une cellule formant habitacle du véhicule, du type dans lequel la partie de structure de caisse comporte au moins deux longerons sensiblement longitudinaux et parallèles qui sont susceptibles de s'écraser longitudinalement d'avant en arrière en cas de choc et sur au moins un desquels est fixé un organe de fixation de la batterie, et du type dans lequel au moins un premier et un deuxième éléments de fixation d'organes mécaniques du véhicule sont agencés dans le compartiment moteur en arrière de la batterie.

On connaît de nombreux exemples d'agencements de ce type.

Dans la plupart de ces agencements, la batterie est fixée rigidement au support qui la porte.

Une batterie conventionnelle est formée d'une coque à l'intérieur de laquelle sont juxtaposés des éléments métalliques très proches les uns des autres. La batterie forme ainsi un ensemble compact de masse élevée.

Dans le cas d'un choc dont l'intensité est suffisamment élevée pour amener le longeron qui porte le support de la batterie à se déformer en s'écrasant, la batterie est susceptible de venir percuter un élément de fixation proéminent rigide, tel que la cloche qui porte les éléments de suspension du véhicule ou un support de boîte de vitesses, et dans ce cas la batterie peut s'opposer à la continuité de l'écrasement du longeron.

Une telle conception est particulièrement préjudiciable à la sécurité des passagers du véhicule.

Pour remédier à cet inconvénient, on a proposé un dispositif, décrit dans le document DE-A1-4331900, dans lequel la batterie est montée sur un support qui, au moins en cas de choc, s'incline d'un angle déterminé par rapport à l'horizontale pour libérer la batterie de son support sous l'effet de l'inertie, en même temps que la batterie rompt ses connexions au circuit électrique du véhicule.

En cas de choc, la batterie est éjectée vers le haut et suivant la direction du choc, c'est à dire sensiblement en direction d'un capot fermant le compartiment moteur du véhicule et vers l'arrière du véhicule, de façon à libérer sous elle un espace propice à la déformation du longeron. De plus, dans la configuration où le longeron comporte en arrière de la batterie une potence d'accrochage d'une boîte de vitesses du véhicule, ce qui est le cas de la majorité des véhicules actuels, la batterie peut ainsi être éjectée au-dessus de cette potence, de sorte qu'en aucun cas elle ne peut être coincée contre cette potence et s'opposer à l'écrasement du longeron.

Cette conception présente toutefois des inconvénients majeurs.

En effet, elle n'est pas prévue pour une configuration de compartiment moteur du type de celle qui a été précédemment décrite, qui comporte, en arrière de la batterie, la cloche qui porte les éléments de suspension du véhicule.

D'une part, la cloche pourrait faire au moins partiellement obstacle à l'éjection de la batterie, puisqu'elle est agencée sensiblement en arrière et à proximité de la batterie. La batterie pourrait ainsi se trouver coincée au moins partiellement contre la cloche, puisque l'espace qui subsiste entre une extrémité supérieure de ladite cloche et la capot est généralement très réduit. Ainsi, pour peu que le choc soit suffisamment violent, la batterie pourrait être bloquée contre la cloche, qui est nécessairement construite de façon rigide pour pouvoir porter efficacement les organes de suspension du véhicule, et elle pourrait perturber ainsi la déformation du longeron.

D'autre part, quand bien même la batterie serait éjectée, la trajectoire de celle-ci, après la rupture de ses liaisons avec le support, ne pourrait plus être contrôlée. Dans cette configuration, la batterie pourrait, même en ayant été éjectée au-dessus de la potence d'accrochage de la boîte de vitesses, s'opposer à l'écrasement du longeron.

Enfin, il est prévu que la batterie rompe ses connexions au circuit électrique du véhicule, ce qui présente l'inconvénient de priver d'alimentation électrique bon nombre d'accessoires électriques du véhicule, tels que notamment des accessoires de sécurité comme une balise d'émission d'un signal de détresse fonctionnant suivant le système GPS ou un système de déverrouillage automatique des portes du véhicule.

Pour remédier à ces inconvénients, l'invention propose un agencement du type précédemment décrit qui permet, en cas de choc, de conférer à la batterie des mouvements d'évitements propres à la dévier d'éléments de fixation d'organes mécaniques tel que la potence d'accrochage de la boite de vitesses ou tel que la cloche porteuse des éléments de suspension du véhicule.

Dans ce but, l'invention propose un agencement du type précédemment décrit, caractérisé en ce que l'organe de fixation de la batterie comporte des moyens de guidage qui permettent, lorsque l'organe de fixation de la batterie est soumis à un déplacement longitudinal consécutif à un choc, de guider la batterie suivant au moins un premier mouvement d'évitement du premier élément puis de guider la batterie suivant un deuxième mouvement d'évitement du deuxième élément.

Selon d'autres caractéristiques de l'invention :
- les moyens de guidage comportent au moins un premier point de fixation de l'organe de fixation sur le longeron qui est susceptible de se rompre au cours du déplacement de l'organe de fixation pour permettre à l'organe de fixation de glisser successivement sur le premier élément suivant le premier mouvement d'évitement au moyen d'une première rampe inclinée portée par des faces de l'organe de fixation, puis de glisser sur le deuxième élément suivant le deuxième mouvement d'évitement au moyen d'une deuxième rampe inclinée portée par des faces de l'organe de fixation,
- le premier mouvement d'évitement est de direction sensiblement verticale, et le second mouvement d'évitement est de direction sensiblement transversale,
- un pied inférieur de l'organe comporte au moins un premier perçage et un deuxième perçage alignés longitudinalement formant les premier et deuxième points de fixation sur le longeron, comporte au moins la première rampe arrière inclinée qui s'étend entre une face horizontale de fond et une face verticale arrière du pied inférieur pour dévier la batterie suivant le premier mouvement d'évitement vertical, et comporte la deuxième rampe arrière inclinée qui s'étend entre une face verticale latérale et la face verticale arrière du pied inférieur pour dévier la batterie transversalement suivant le deuxième mouvement d'évitement transversal,
- la première rampe s'étend transversalement sur toute la largeur du pied inférieur,
- le longeron comporte un support qui s'étend transversalement vers l'intérieur du compartiment moteur pour permettre la fixation de l'organe de fixation par l'intermédiaire d'un troisième point de fixation, notamment un perçage,
- la batterie est reliée électriquement à un circuit électrique du véhicule par l'intermédiaire d'un faisceau de câbles dont des brins libres de longueur déterminée permettent le déplacement de la batterie en cas de choc, sans rupture dudit faisceau de câbles,
- le premier élément de fixation est constitué d'une potence d'accrochage d'une boîte de vitesses du véhicule et le deuxième élément est constitué d'une cloche porteuse d'éléments de suspension du véhicule.

D'autres caractéristiques et avantages de l'invention apparaîtront à la lecture de la description détaillée qui suit pour la compréhension de laquelle on se reportera aux dessins annexés dans lesquels :
- la figure 1a est une vue d'ensemble en perspective de la moitié d'un élément longitudinal de structure de caisse du véhicule automobile représentant deux positions de la batterie équipée d'un organe de fixation selon l'invention ;
- les figure 1b et 1c sont des vues schématiques de côté illustrant le mouvement d'évitement vertical de la batterie ;
- les figure 1d et 1e sont des vues schématiques de dessus illustrant le mouvement d'évitement transversal de la batterie ;
- la figure 2 est une vue de détail en perspective de l'organe de fixation ;
- la figure 3 est une vue de détail en perspective de l'organe de fixation.

Dans la description qui va suivre, des chiffres de référence identiques désignent des pièces identiques ou ayant des fonctions similaires.

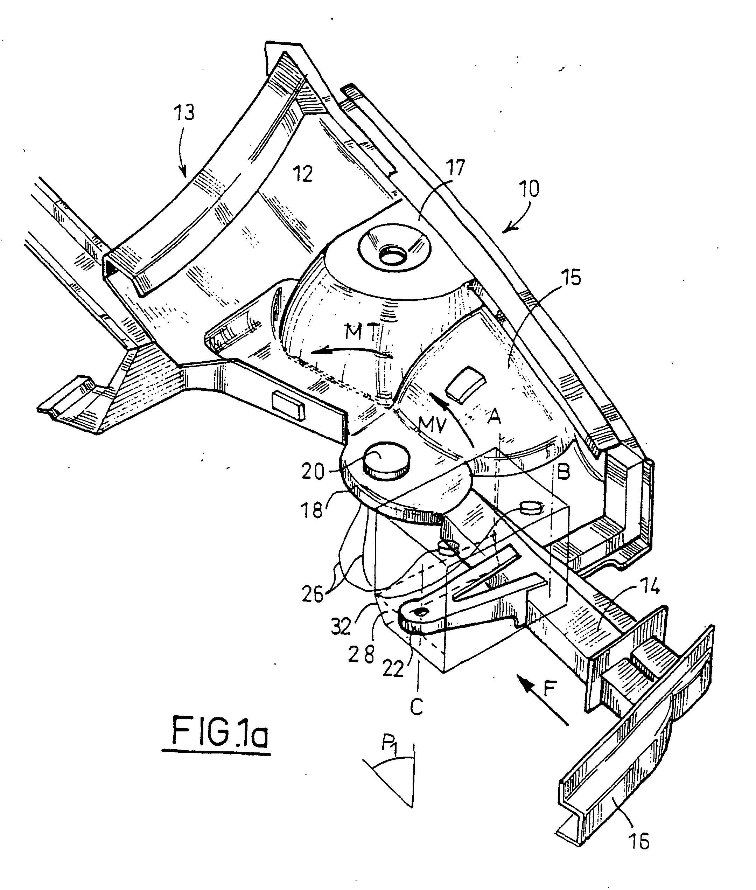

On a représenté à la figure 1a la moitié 12 d'une partie 10 longitudinal de structure de caisse formant compartiment pour un moteur (non représenté) du véhicule. Chaque moitié 12 est symétrique de la moitié opposée par rapport à un plan "P₁" longitudinal vertical. La partie 10 s'étend en avant d'une cellule 13 formant habitacle du véhicule.

De manière connue, la partie 10 de structure de caisse comporte deux longerons 14 sensiblement longitudinaux et parallèles, qui sont notamment réunis par une traverse avant 16, et dont au moins un porte des organes mécaniques ou des accessoires du véhicule. Le longeron 14 qui est représenté à la figure 1a comporte un support 22 avant qui s'étend transversalement vers l'intérieur du compartiment moteur à partir du longeron 14 et qui est destiné à participer à la fixation d'une batterie 24 d'accumulateurs du véhicule.

Par ailleurs, la partie 10 de structure de caisse qui est représentée à la figure 1a comporte un premier élément de fixations d'organes mécaniques du véhicule, notamment une potence 18 arrière qui s'étend transversalement à partir dudit longeron 14 et qui porte un premier support correspondant, par exemple, un élément 20 élastique ou "silentbloc" pour l'accrochage d'une boîte de vitesses (non représentée) du véhicule.

Le longeron 14 comporte, d'avant en arrière le long de son côté 13 extérieur, une joue 15 avant formant passage de roue qui s'étend verticalement à partir du longeron 14. La partie 10 de structure de caisse comporte un deuxième élément de fixation d'organes mécaniques, par exemple, une cloche 17 sensiblement verticale qui est porteuse d'éléments (non représentés) sensiblement verticaux de suspension du véhicule.

La cloche 17 est accolée au longeron en arrière du support 22 de fixation de la batterie et de la potence 18 d'accrochage de la boîte de vitesses.

De manière connue, la batterie 24, qui a été représentée en traits fantômes dans sa position normale, est fixée pour partie sur le longeron 14 par l'intermédiaire de premier et deuxième points de fixation par des vis (non représentées) d'axes verticaux A et B et pour partie sur le support 22 transversal par l'intermédiaire d'un troisième point de fixation par une vis (non représentée) d'axe vertical C qui est agencée à l'extrémité du support 22. La batterie 24 est reliée à un circuit électrique (non représenté) du véhicule par l'intermédiaire d'un faisceau de câbles électriques 26.

Conformément à l'invention, l'organe 28 de fixation de la batterie 24 comporte des moyens de guidage qui permettent, lorsque l'organe 28 de fixation de la batterie est soumis à un déplacement "F" longitudinal consécutif à un choc, de guider la batterie 24 suivant au moins un premier mouvement "MV" d'évitement du premier élément 18 puis de guider la batterie suivant un deuxième mouvement "MT" d'évitement du deuxième élément 17.

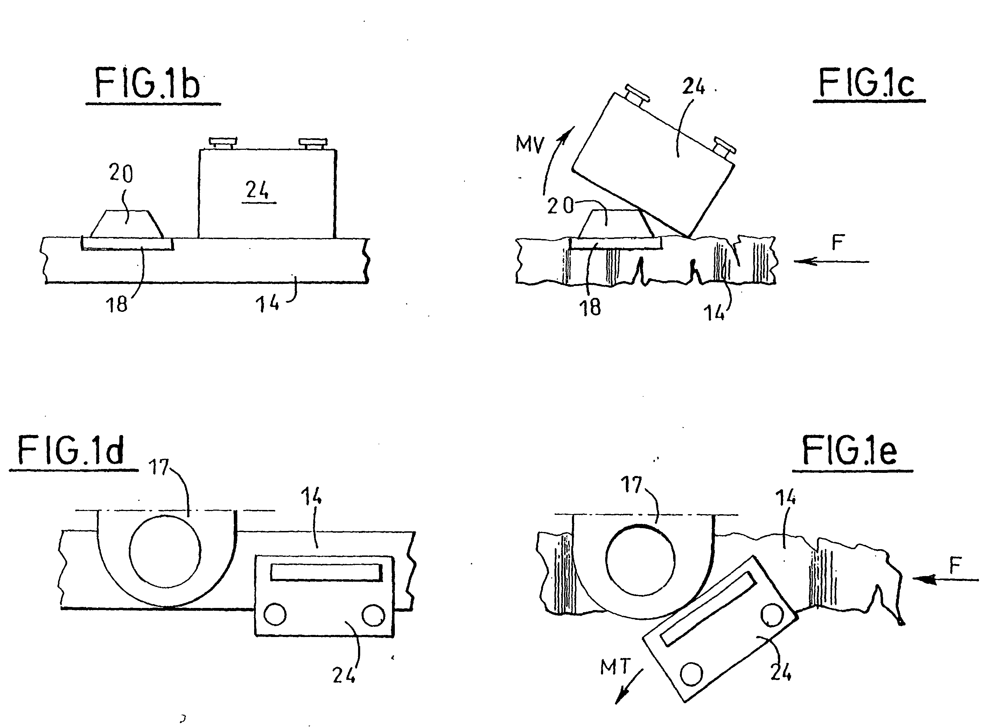

Plus particulièrement, les moyens de guidage comportent au moins le premier point 50 de fixation de l'organe 28 de fixation sur le longeron 14 qui est susceptible de se rompre au cours du déplacement "F" de l'organe 28 de fixation. La rupture du premier pont 50 de fixation permet à l'organe 28 de fixation de glisser successivement sur le premier élément constitué de la potence 18 suivant le premier mouvement d'évitement "MV" au moyen d'une première rampe inclinée 30 portée par des faces 58, 60 de l'organe 28 de fixation, puis de glisser sur le deuxième élément constitué de la cloche 17 suivant le deuxième mouvement d'évitement "MT" au moyen d'une deuxième rampe inclinée 32 portée par des faces 60, 62 de l'organe 28 de fixation. Le mouvement d'évitement vertical "MV" est représenté en références aux figures 1b et 1c et le mouvement d'évitement transversal "MT" est représenté aux figures 1d et 1e.

En particulier, le premier mouvement "MV" d'évitement est de direction sensiblement verticale, et le second mouvement "MT" est de direction sensiblement transversale.

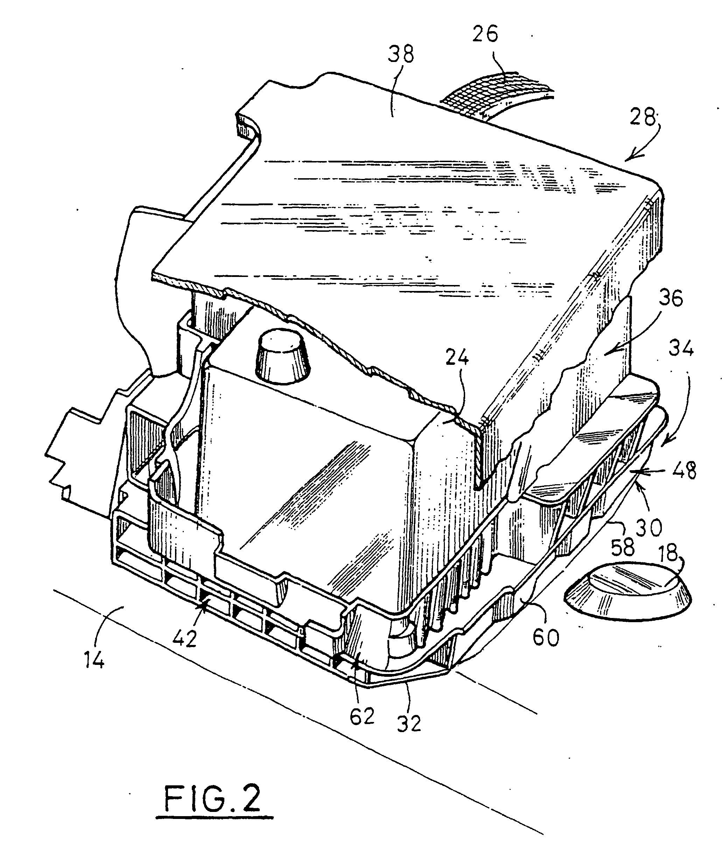

Comme l'illustre la figure 2, l'organe 28 comporte au moins un pied inférieur 34 qui comporte la première rampe arrière inclinée 30 et la deuxième rampe arrière inclinée 32, un boîtier intermédiaire 36 de réception de la batterie qui est fixé au dessus du pied inférieur 34, et un couvercle supérieur 38 qui ferme le boîtier intermédiaire 36.

Le pied inférieur 34 de l'organe 28 comporte au moins un premier perçage 50 et un deuxième perçage 52 alignés longitudinalement qui forment les premier et deuxième points de fixation sur le longeron 14. Le pied inférieur 34 comporte au moins la première rampe arrière 30 inclinée qui s'étend entre une face 58 horizontale de fond et une face verticale 60 arrière du pied inférieur 34 pour dévier la batterie 24 suivant le premier mouvement "MV" d'évitement vertical, et il comporte aussi la deuxième rampe 32 arrière inclinée qui s'étend entre une face 62 verticale latérale et la face 60 verticale arrière du pied inférieur 34 pour dévier la batterie 24 transversalement suivant le deuxième mouvement "MT" d'évitement transversal. Les rampes inclinées 30 et 32 sont aussi représentées à la figure 2.

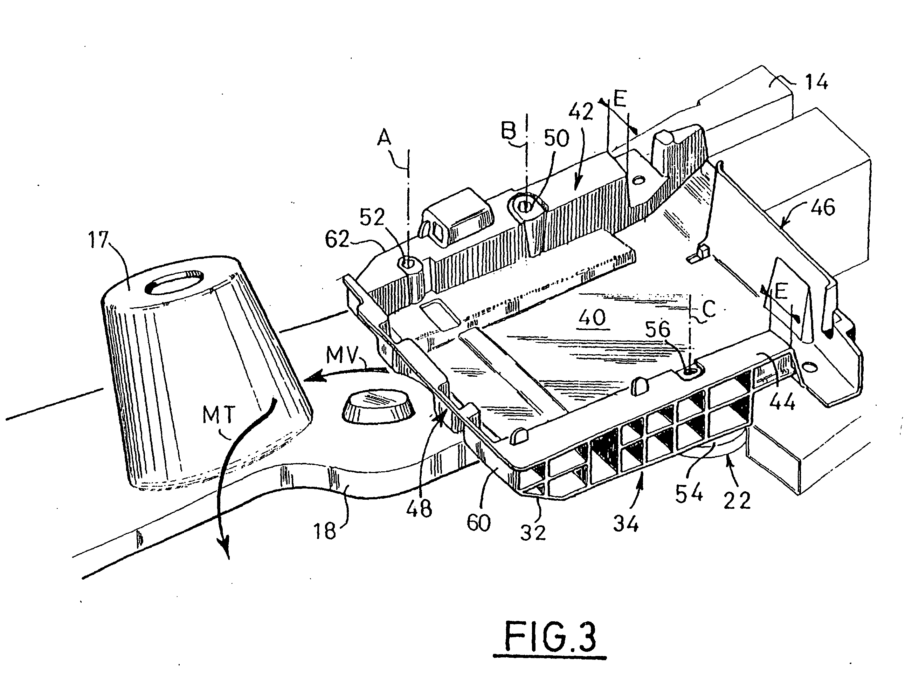

Comme l'illustre à la figure 3, qui représente le détail du pied inférieur 34, celui-ci est sensiblement de la forme d'un parallélépipède en matériau plastique. Dans le mode de réalisation préféré de l'invention, le pied inférieur 34 est creux et comporte un évidement 40, qui permet par exemple de recevoir un équipement électronique (non représenté) du véhicule.

L'évidement est délimité par deux parois latérales longitudinales 42, 44 et deux parois transversales d'extrémité 46 avant et 48 arrière. La paroi latérale longitudinale 42 est agencée à l'aplomb du longeron 14 et comporte dans son épaisseur "E" les deux perçages 50 et 52 pour la fixation par vis d'axes respectifs B et A de l'organe 28, dont fait partie le pied inférieur 34, sur le longeron 14. La paroi latérale longitudinale 44 est agencée à l'aplomb de l'extrémité 54 du support 22 et comporte, dans son épaisseur "E", un perçage 56 pour la fixation par une vis d'axe C de l'organe 28, dont fait partie le pied inférieur 34, sur le support 22.

Le matériau plastique du pied inférieur 34 est localement cassable de façon que, en cas de choc, au moins le perçage 52 de la cloison latérale longitudinale 42 soit détruit pour libérer le pied inférieur 34, et donc l'ensemble de l'organe 28 de fixation, suivant le mouvement vertical d'évitement MV, puis suivant le mouvement transversal d'évitement MT.

En effet, dans le mode de réalisation préféré de l'invention, la cassure du perçage 52, conjuguée avec la déformation du longeron 14, permet les deux mouvements "MV" et "MT" successifs.

Cette disposition n'est toutefois pas limitative de l'invention. En variante, la destruction du perçage 52 pourrait ne permettre que le seul mouvement d'évitement "MV" de la potence 18. Dans cette configuration, lors d'une phase ultérieure de l'écrasement du longeron, le perçage 50 de la cloison latérale longitudinale 42 pourrait être détruit à son tour pour libérer le pied inférieur 34, et donc l'ensemble de l'organe 28 de fixation, suivant le mouvement transversal MT.

Le matériau plastique autour du perçage 56 est prévu quand à lui, pour résister au choc de façon que l'organe 28 de fixation demeure lié au longeron 14. Cette configuration permet d'éviter des déplacements non contrôlés de la batterie 24

Avantageusement, la première rampe 30 s'étend transversalement sur toute la largeur transversale de la cloison arrière 48 du pied inférieur 34. Dans le mode de réalisation qui a été représenté sur les figures, la deuxième rampe 32 s'étend seulement sur une partie de la longueur longitudinale de la cloison latérale 42 et seulement sur une partie de la largeur transversale de la cloison arrière 48, c'est à dire dans le coin du pied inférieur 34 qui réunit la cloison latérale 42 et la cloison arrière 48. Cette disposition n'est toutefois pas limitative de l'invention.

De la sorte, lorsque le longeron 14 est soumise au choc et que le pied inférieur 34 est soumis à un déplacement "F", au moins la vis de fixation associée au perçage 52 de l'organe 28 est libérée, et l'organe 28 est susceptible de contourner par le dessus la potence 18 d'accrochage de la boîte de vitesses suivant le mouvement vertical "MV", puis de d'être écarté de la cloche 17 suivant le mouvement transversal "MT" en glissant dessus, comme représenté par les flèches associées des figures 1a, 1c, 1e, et 3.

Ces deux mouvements "MV" et "MT" sont avantageusement rendus possibles par le choix d'une longueur déterminée du faisceau de câbles 26 qui laissent une grande liberté de mouvement à la batterie 24. Les brins libres du faisceau de câbles 26 permettent le déplacement de la batterie en cas de choc sans rupture dudit faisceau de câbles 26.

Ceci permet, même en cas de choc, de ne pas déconnecter la batterie 24 du circuit électrique du véhicule, ce qui permet avantageusement de maintenir l'alimentation d'équipements électriques du véhicule tels qu'une balise de détresse fonctionnant suivant le système GPS.

L'invention permet avantageusement d'éviter qu'en cas de choc violent, la batterie 24 n'empiète sur d'autres organes rigides ou sur des éléments rigides de structure, et ne provoque ainsi l'intrusion d'un de ces organes ou éléments à l'intérieur de l'habitacle.

## Revendications

1. Agencement pour le montage d'une batterie (24) d'accumulateurs dans un véhicule automobile qui comporte une partie (10) de structure de caisse formant compartiment moteur qui est agencée en avant d'une cellule (13) formant habitacle du véhicule, du type dans lequel la partie (10) de structure de caisse comporte au moins deux longerons (14) sensiblement longitudinaux et parallèles qui sont susceptibles de s'écraser longitudinalement d'avant en arrière en cas de choc et sur au moins un desquels est fixé un organe (28) de fixation de la batterie (24), et du type dans lequel au moins un premier (18) et un deuxième (17) éléments de fixation d'organes mécaniques du véhicule sont agencés dans le compartiment moteur en arrière de la batterie (24),
**caractérisé en ce que** l'organe (28) de fixation de la batterie comporte des moyens de guidage (30, 32) qui permettent, lorsque l'organe (28) de fixation de la batterie est soumis à un déplacement (F) longitudinal consécutif à un choc, de guider la batterie (24) suivant au moins un premier mouvement (MV) d'évitement du premier élément (18) puis de guider la batterie suivant un deuxième mouvement (MT) d'évitement du deuxième élément (17).

2. Agencement selon la revendication précédente, **caractérisé en ce que** les moyens de guidage comportent au moins un premier (50) point de fixation de l'organe (28) de fixation sur le longeron (14) qui est susceptible de se rompre au cours du déplacement (F) de l'organe (28) de fixation pour permettre à l'organe (28) de fixation de glisser successivement sur le premier élément (18) suivant le premier mouvement d'évitement (MV) au moyen d'une première rampe inclinée (30) portée par des faces (58, 60) de l'organe (28) de fixation, puis de glisser sur le deuxième élément (17) suivant le deuxième mouvement d'évitement (MT) au moyen d'une deuxième rampe inclinée (32) portée par des faces (60, 62) de l'organe (28) de fixation.

3. Agencement selon l'une des revendications précédentes, **caractérisé en ce que** le premier mouvement (MV) d'évitement est de direction sensiblement verticale, et **en ce que** le second mouvement (MT) est de direction sensiblement transversale.

4. Agencement selon la revendication précédente, **caractérisé en ce qu'**un pied inférieur (34) de l'organe (28) comporte au moins un premier perçage (50) et un deuxième perçage (52) alignés longitudinalement formant les premier et deuxième points de fixation sur le longeron (14), comporte au moins la première rampe arrière (30) inclinée qui s'étend entre une face (58) horizontale de fond et une face verticale (60) arrière du pied inférieur (34) pour dévier la batterie (24) suivant le premier mouvement (MV) d'évitement vertical, et comporte la deuxième rampe (32) arrière inclinée qui s'étend entre une face (62) verticale latérale et la face (60) verticale arrière du pied inférieur (34) pour dévier la batterie (24) transversalement suivant le deuxième mouvement (MT) d'évitement transversal.

5. Agencement selon la revendication précédente, **caractérisé en ce que** la première rampe (30) s'étend transversalement sur toute la largeur du pied inférieur (34).

6. Agencement selon l'une des revendications précédentes, **caractérisé en ce que** le longeron (14) comporte un support (22) qui s'étend transversalement vers l'intérieur du compartiment moteur pour permettre la fixation (56) de l'organe de fixation (28) par l'intermédiaire d'un troisième point de fixation, notamment un perçage (56).

7. Agencement selon l'une quelconque des revendications précédentes, **caractérisé en ce que** la batterie (24) est reliée électriquement à un circuit électrique du véhicule par l'intermédiaire d'un faisceau de câbles (24) dont des brins libres de longueur déterminée permettent le déplacement de la batterie (24) en cas de choc, sans rupture dudit faisceau de câbles (24).

8. Agencement selon l'une quelconque des revendication précédentes, **caractérisé en ce que** le premier élément (18) de fixation est constitué d'une potence d'accrochage d'une boîte de vitesses du véhicule et **en ce que** le deuxième élément (17) est constitué d'une cloche porteuse d'éléments de suspension du véhicule.

## Patentansprüche

1. Anordnung für die Montage einer Akkumulatorenbatterie (24) in einem automobilen Fahrzeug, aufweisend ein Teil (10) der Gehäusestruktur, welche einen Motorraum formt, welche vor einer Zelle (13) angeordnet ist, die die Fahrgastzelle des Fahrzeugs formt von einem Typ, in welchem das Teil (10) der Gehäusestruktur aufweist wenigstens zwei im Wesentlichen longitudinale und parallele Träger (14), welche dazu geeignet sind, von vorne nach hinten eingedrückt zu werden im Falle eines Schocks, und auf wenigstens einem derselben ein Element (28) befestigt ist zur Befestigung der Batterie (24), und von einem Typ, in welchem wenigstens ein erstes (18) und ein zweites (17) Element zur Fixierung mechanischer Bauteile des Fahrzeugs angeordnet sind im Motorraum hinter der Batterie (24),
**dadurch gekennzeichnet, dass** das Element (28) zur Befestigung der Batterie aufweist Mittel zur Führung (30, 32), welche es erlauben, wenn das Element (28) zur Befestigung der Batterie unterworfen ist einer longitudinalen Verschiebung (F), bedingt durch einen Schock, die Batterie (24) zu führen gemäß wenigstens einer ersten Bewegung (MV) zum Ausweichen vor dem ersten Element (18), danach die Batterie zu führen gemäß einer zweiten Bewegung (MT) zum Ausweichen vor dem zweiten Element (17).

2. Anordnung gemäß dem vorangegangenen Anspruch, **dadurch gekennzeichnet, dass** die Mittel zur Führung aufweisen wenigstens einen ersten (50) Punkt zur Befestigung des Elements (28) zur Befestigung auf dem Träger (14), welcher geeignet ist zu brechen im Verlauf der Verschiebung (F) des Elements (28) zur Befestigung, um es dem Element (28) zur Bestigung zu erlauben, nacheinander zu gleiten über das erste Element (18) gemäß der ersten Ausweichbewegung (MV) mittels einer ersten geneigten Rampe (30), welche getragen ist von den Seiten (58, 60) des Elements (28) zur Befestigung, danach zu gleiten auf das zweite Element (17) gemäß der zweiten Ausweichbewegung (MT) mittels einer zweiten geneigten Rampe (32), welche getragen ist von den Seiten (60, 62) des Elements (28) zur Befestigung.

3. Anordnung gemäß einem der vorangegangenen Ansprüche, **dadurch gekennzeichnet, dass** die erste Ausweichbewegung (MV) in eine im Wesentlichen vertikalen Richtung ist, und dass die zweite Bewegung (MT) in eine im Wesentlichen transversalen Richtung ist.

4. Anordnung gemäß dem vorangegangenen Anspruch, **dadurch gekennzeichnet, dass** ein unterer Fuß (34) des Elements (28) aufweist wenigstens eine erste Bohrung (50) und eine zweite Bohrung (52), welche longitudinal ausgerichtet sind, welche die ersten und zweiten Punkte zur Befestigung auf dem Träger (14) formen, aufweist wenigstens die geneigte erste hintere Rampe (30), welche sich erstreckt zwischen einer horizontalen Seite (58) des Bodens und einer hinteren vertikalen Seite (60) des unteren Fußes (34), um die Batterie (24) abzulenken gemäß der ersten vertikalen Ausweichbewegung (MV), und aufweist die geneigte zweite hintere Rampe (32), welche sich erstreckt zwischen einer vertikalen seitlichen Seite (62) und der hinteren vertikalen Seite (60) des unteren Fußes (34), um die Batterie (24) transversal abzulenken gemäß der zweiten transversalen Ausweichbewegung (MT).

5. Anordnung gemäß dem vorangegangenen Anspruch, **dadurch gekennzeichnet, dass** die erste Rampe (30) sich transversal erstreckt über die gesamte Länge des unteren Fußes (34).

6. Anordnung gemäß einem der vorangegangenen Ansprüche, **dadurch gekennzeichnet, dass** der Träger (14) aufweist eine Stütze (22), welche sich transversal erstreckt in Richtung auf das Innere des Motorraums, um die Befestigung (56) des Befestigungselements (28) zu erlauben über einen dritten Punkt zur Befestigung, insbesondere einer Bohrung (56).

7. Anordnung gemäß einem der vorangegangenen Ansprüche, **dadurch gekennzeichnet, dass** die Batterie (24) elektrisch verbunden ist mit einer elektronischen Schaltung des Fahrzeugs über einen Kabelstrang (24), dessen freie Adern von bestimmter Länge die Verschiebung der Batterie (24) im Falle eines Schocks erlauben, ohne Bruch des Kabelstrangs (24).

8. Anordnung gemäß einem der vorangegangenen Ansprüche, **dadurch gekennzeichnet, dass** das erste Element (18) zur Befestigung besteht aus einem Haltearm eines Getriebes des Fahrzeugs und dass das zweite Element (17) besteht aus einer Haube, welche Aufhängungselemente des Fahrzeugs trägt.

## Claims

1. Arrangement for mounting an accumulator battery (24) in an automotive vehicle that comprises a structural body part (10) forming an engine compartment arranged in front of a cell (13) forming the passenger compartment of the vehicle, of the type in which the structural body part (10) comprises at least two approximately longitudinal and parallel side members (14) that may be crushed longitudinally from front to rear in the event of an impact and to at least one of which is fixed a fixing unit (28) for the battery (24), and of the type in which at least a first (18) and second (17) components for fixing mechanical units to the vehicle are arranged in the engine compartment behind the battery (24),
**characterised in that** the battery fixing unit (28) comprises guidance means (30, 32) that are used to guide the battery (24) in at least a first movement (MV) to avoid the first component (18) and then guide the battery in a second movement (MT) to avoid the second component (17) when the battery fixing unit (28) is subjected to a longitudinal movement (F) as a result of an impact.

2. Arrangement according to the previous claim, **characterised in that** the guidance means comprise at least a first (50) point for fixing the fixing unit (28) to the side member (14) that is able to break during the movement (F) of the fixing unit (28) to allow the fixing unit (28) to slide successively over the first component (18) in the first avoidance movement (MV) by means of a first sloped ramp (30) held by surfaces (58, 60) of the fixing unit (28) and then to slide over the second component (17) in the second avoidance movement (MT) by means of a second sloped ramp (32) held by surfaces (60, 62) of the fixing unit (28).

3. Arrangement according to either of the previous claims, **characterised in that** the first avoidance movement (MV) is in an approximately vertical direction and the second movement (MT) is in an approximately transverse direction.

4. Arrangement according to the previous claim, **characterised in that** a lower leg (34) of the unit (28) comprises at least a first hole (50) and a second hole (52) that are longitudinally aligned and form the first and second fixing points to the side member (14), at least the first rear sloped ramp (30) that extends between a horizontal bottom surface (58) and a rear vertical surface (60) of the lower leg (34) to deflect the battery (24) in the first vertical avoidance movement (MV) and the second rear sloped ramp (32) that extends between a side vertical surface (62) and the rear vertical surface (62) of the lower leg (34) to deflect the battery (24) transversely in the second transverse avoidance movement (MT).

5. Arrangement according to the previous claim, **characterised in that** the first ramp (30) extends transversely over the entire width of the lower leg (34).

6. Arrangement according to any one of the previous claims, **characterised in that** the side member (14) comprises a mounting (22) that extends transversely into the engine compartment to allow for the fixing unit (28) to be fixed (56) by means of a third fixing point, in particular a hole (56).

7. Arrangement according to any one of the previous claims, **characterised in that** the battery (24) is electrically connected to an electrical circuit on the vehicle by means of a cable harness (24) of which the free ends of a given length allow the battery (24) to move in the event of an impact without the cable harness (24) breaking.

8. Arrangement according to any one of the previous claims, **characterised in that** the first fixing component (18) is made up of a support for the vehicle's gearbox and the second component (17) is made up of a housing containing vehicle suspension components.
